# EUROPÄISCHE PATENTSCHRIFT

(11) **EP 0 485 885 B1**
(45) Veröffentlichungstag und Bekanntmachung des Hinweises auf die Patenterteilung: **18.01.1995**
(21) Anmeldenummer: 91118969.4
(22) Anmeldetag: 07.11.1991
(51) Int. Cl.: A47J 31/46

(54) **Ausgabeventilanordnung für Brühwasser, insbesondere an einem Heissgetränkeautomaten, sowie Betriebsverfahren zur Steuerung der Ausgabeventilanordnung**
Dispensing valve assembly for hot wate, especially for hot drink dispenser, and the process for controlling the dispensing valve assembly
Agencement de soupape de distribution d'eau bouillante, en particulier dans des distributeurs de boissons chaudes, et procédé pour contrôler l'agencement de soupape de distribution

(30) Priorität: 13.11.1990 DE 4036068
(43) Veröffentlichungstag der Anmeldung: 20.05.1992
(73) Patentinhaber: A. und K. Müller GmbH & Co. KG, D-40593 Düsseldorf (DE)
(72) Erfinder: Moldenhauer, Hermann, W-4000 Düsseldorf 12 (DE)
(74) Vertreter: Feder, Wolf-Dietrich, Dr. Dipl.-Phys.

(56) Entgegenhaltungen:
- EP-A- 0 243 677
- EP-A- 0 345 521
- GB-A- 1 056 333

## Beschreibung

Die Erfindung betrifft eine Ausgabeventilanordnung für Brühwasser, insbesondere an einem Heißgetränkeautomaten, mit mindestens einein Ausgabeventil, das einen an einen Brühwasserbehälter angeschlossenen Ventileinlaß und einen über einen Ventilsitz mit dem Ventileinlaß verbundenen Ventilauslaß aufweist.

Eine derartige Ausgabeventilanordnung mit einem Ausgabeventil ist beispielsweise in der europäischen Patentschrift EP 0 243 677 B1 beschrieben. Bei dieser bekannten Einrichtung ist das Ausgabeventil in der Nähe der Grenze der oberen Wasserniveauhöhe des Brühwasserbehälters angeordnet, um beim Brühvorgang eine gleichmäßige, von der Thermostateinstellung vorgegebene Brühwassertemperatur zu erreichen. Nachteilig hierbei ist, daß für eine erforderliche präzise Dosierung des Brühwassers die Niveauhöhe oberhalb des Entnahmebereiches zu gering ist, insbesondere dadurch, da diese Niveauhöhe Schwankungen unterliegt, die durch die Nachspeisung von Frischwasser verursacht werden. In der obengenannten Veröffentlichung wird dieses Problem dadurch gemindert, daß die hinter dem Ventilauslaß liegende Gefällstrecke mit in die Niveauhöhe einbezogen werden kann. Dies setzt voraus, daß ein möglichst großer Höhenunterschied zwischen der Wasserniveauhöhe im Brühwasserbehälter und der eigentlichen Ausgabestelle vorhanden sein sollte, um eine optimale Niveaudifferenz zu erreichen. Die Dosierzeit ist ebenfalls von der ausnutzbaren Niveauhöhe abhängig.

Es hat sich nun herausgestellt, daß auch bei derartig ausgebildeten Ausgabeventilanordnungen noch merkbare Ungenauigkeiten bei der Dosierung des Brühwassers auftraten, die sich ja nach dem erwünschten Konzentrationsgrad des Heißgetränkes unangenehm bemerkbar machen können.

Diese Ungenauigkeiten in der Dosierung beruhen vermutlich auf folgenden Zusammenhängen:
Die Wassertemperatur des auszugebenden Brühwassers liegt im allgemeinen in der Nähe des Siedepunktes. Da das Ausgabeventil im Niederdruckbereich arbeitet, kann es in Teilbereichen der Ausgabestrecke zu einem solchen Druckabfall kommen, daß die sich hieraus ergebende Siedepunkterniedrigung zur Bildung von Dampfblasen führt, welche Dosierungenauigkeiten bewirken. Zusätzlich können durch Querschnittsveränderungen im Fließweg Kavitationen entstehen, die ebenfalls eine genaue Dosierung negativ beeinflussen.

Der Erfindung liegt die Aufgabe zugrunde, eine Ausgabeventilanordnung der oben erwähnten Bauart so auszugestalten, daß ein Druckabfall im Fließweg des Brühwassers, der zur Bildung von Dampfblasen führen kann, vermieden wird.

Die Lösung dieser Aufgabe erfolgt erfindungsgemäß mit den Merkmalen aus dem kennzeichnenden Teil des Patentanspruches 1. Vorteilhafte Weiterbildungen der erfindungsgemäßen Ausgabeventilanordnung sind in den Unteransprüchen 2 bis 14 beschrieben.

Weiterhin beschreiben die Ansprüche 15 bis 17 ein Betriebsverfahren zur besonders vorteilhaften Steuerung einer Ausgabeventilanordnung gemäß der Erfindung.

Der Grundgedanke der Erfindung besteht darin, das Brühwasser durch eine Bypassleitung zum Brühwasserbehälter zu führen, in der durch Anordnung einer Pumpe zu Beginn der Bypassleitung und einer Drosselvorrichtung am Ende der Bypassleitung ein vorwählbarer höherer Wasserdruck aufrecnterhalten werden kann und die Zuführung des Brühwassers zu den Ausgabeventilen entweder aus dieser Bypassleitung durchzuführen oder die Ventilkammern der Ausgabeventile selbst in die Bypassleitung mit einzubeziehen.

Durch die hiermit erreichte Druckanhebung in dem dem Ventileinlaß zugeführten Brühwasser wird der Siedepunkt des Brühwassers entsprechend augehoben, beispielsweise auf einen Wert oberhalb von 100° C, so daß es nicht mehr zur Bildung von Dampfblasen kommen kann. Durch diese Druckerhöhung wird das gesamte System vom anstehenden Niveau im Brühwasserbehälter und der eingestellten Wassertemperatur weitgehend unabhängig. Hierdurch wird die Dosiergenauigkeit derart verbessert, daß unabhängig von den üblichen Einflüssen einer bestimmten Zeit eine bestimmte Dosiermenge zugeordnet werden kann. Moderne Heißgetränkeautomaten, die mit derartigen Ausgabeventilen ausgerüstet sind, werden häufig durch Mikroprozessoren gesteuert und hierdurch vorzugsweise mit Gleichstromausgängen für die Ausgabeventile ausgelegt. Dadurch können die Öffnungszeiten der Ausgabeventile in feinen Abstufungen verändert werden, und die Dosiermenge kann durch entsprechende Steuerung der Stromversorgung der Pumpe exakt bestimmt werden.

Es hat sich gezeigt, daß mit der erfindungsgemäßen Ausgabeventilanordnung Betriebsverfahren durchführbar sind, die zu besonders guten Ergebnissen führen, indem beispielsweise jeweils zu einem vorgegebenen Zeitpunkt vor dem Öffnen eines oder mehrerer der Ausgabeventile zunächst der Pumpenantrieb eingeschaltet wird, damit eventuell vorhandene Dampfblasen wieder in den Wasserbehälter gedrückt werden und der für die Dosierung erforderliche Staudruck aufgebaut wird. Zu einem vorgegebenen Zeitpunkt nach dem Schließen des letzten Ausgabeventils kann der Pumpenantrieb wieder abgeschaltet werden. Weiterhin ist es möglich, eine gleichbleibende Temperatur in den Ausgabeventilen dadurch zu erreichen, daß in vorgegebenen Zeitintervallen der Pumpenantrieb ein- und wieder ausgeschaltet wird.

Schließlich ist es auch möglich, bei einem Entkalkungsvorgang der Ausgabeventilanordnung den Pumpenantrieb für einen längeren Zeitraum einzuschalten, um so eine längere kräftige Zirkulation durch den Bypass bzw. die Ventilkammern zu erreichen, durch den gegebenenfalls unter Zusatz von Entkalkungsmitteln die Entkalkung gefördert wird.

Im Folgenden wird anhand der beigefügten Zeichnungen ein Ausführungsbeispiel für eine Ausgabeventilanordnung für Brühwasser nach der Erfindung näher erläutert.

In den Zeichnungen zeigen:
- Fig. 1: einen Brühwasserbehälter mit einer Ausgabeventilanordnung in einer Teilansicht von vorne;
- Fig. 2: den Brühwasserbehälter mit Ausgabeventilanordnung nach Fig. 1 in einer Teilansicht von oben;
- Fig. 3: den Brühwasserbehälter nach Fig. 1 und 2 in schematischer Darstellung in einem vertikalen Teilschnitt nach der Linie III-III in Fig. 2;
- Fig. 4: in einem Vertikalschnitt den Aufbau eines der Ausgabeventile der Ausgabeventilanordnung nach Fig. 1 bis 3.
- Fig. 5: in einer Darstellung analog Fig. 4 eine Ausführungsvariante eines Ausgabeventils.

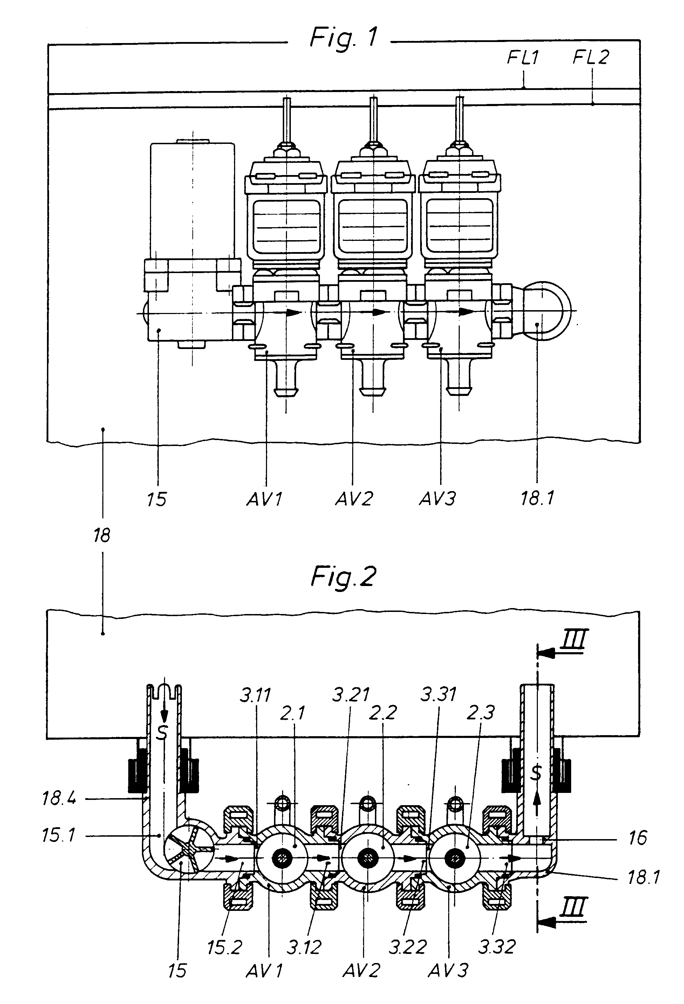

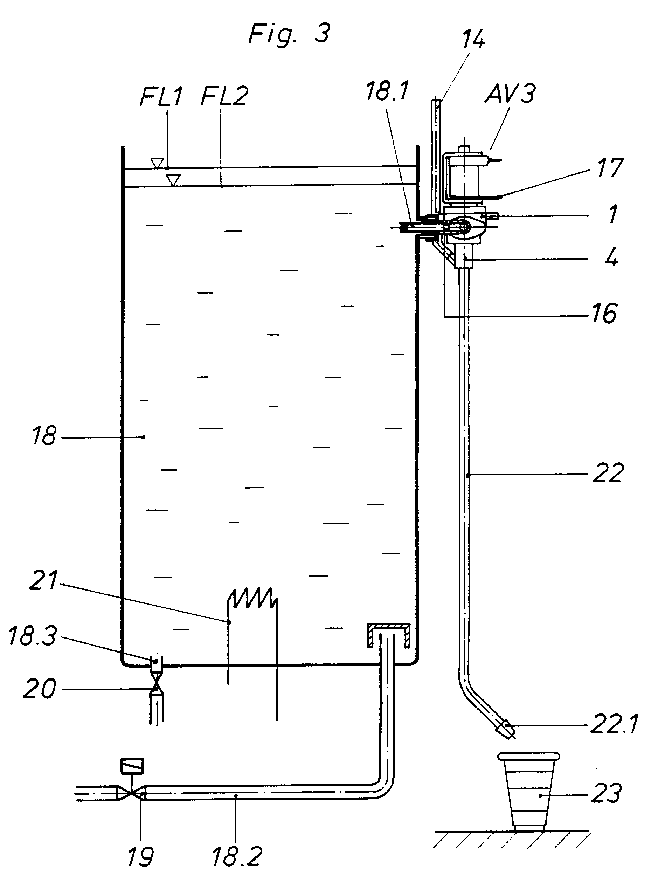

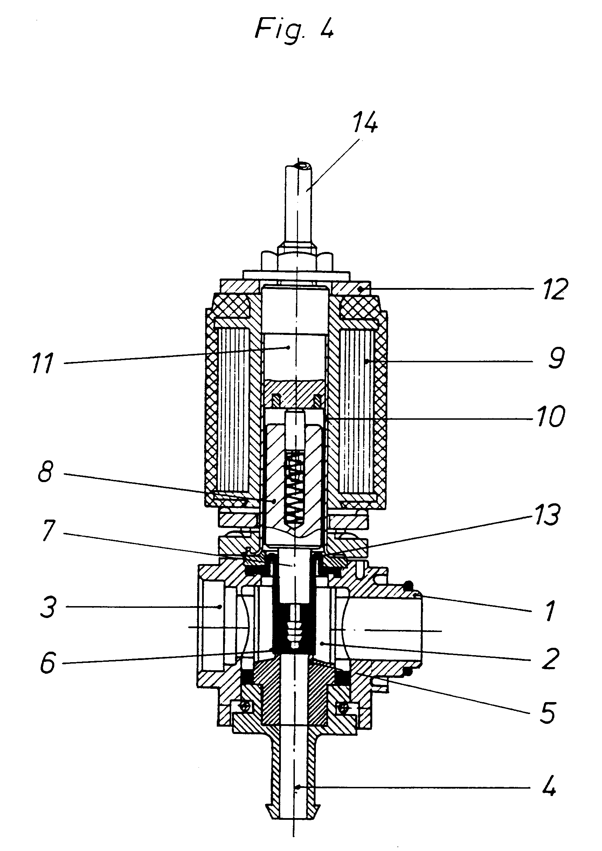

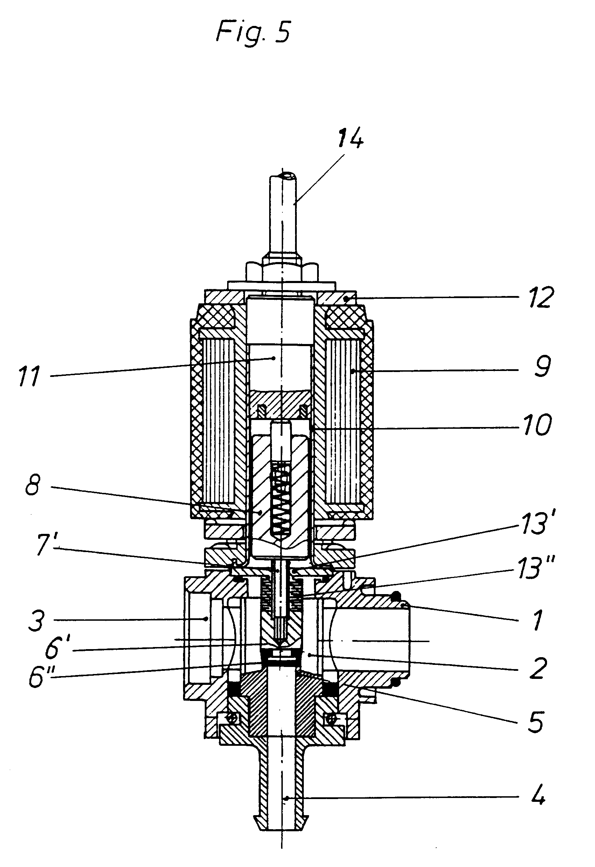

In den Figuren 1 bis 3 ist schematisch ein Heißgetränkeautomat dargestellt mit einem Brühwasserbehälter 18, in dem die durch ein Heizelement 21 zu erhitzende Flüssigkeit enthalten ist, wobei der Flüssigkeitsspiegel zwischen den Werten FL1 und FL2 schwanken kann. Das Wasser wird dem Brühwasserbehälter 18 von unten durch eine Zuführungsleitung 18.2 zugeführt, in der ein Ventil 19 angeordnet ist. Die vollständige Entleerung des Boilers 18 zur Reinigung kann über einen Ablaufstutzen 18.3 erfolgen, in dem ein Ventil 20 angeordnet ist. Die Entnahme des Brühwassers zur Erzeugung eines Getränkes erfolgt durch eine am Oberteil des Brühwasserbehälters 18 angeordnete Ausgabeventilanordung mit drei Ausgabeventilen AV1, AV2, AV3, deren genauerer Aufbau weiter unten anhand von Fig. 4 und 5 erläutert wird. In Fig. 3 ist dargestellt, daß jedes Ventil ein Ventilgehäuse 1 aufweist sowie einen in Fig. 3 nicht sichtbaren Ventileinlaß 3 (siehe Fig. 4), einen Ventilauslaß 4 und einen elektrischen Anschluß 17 zur Steuerung des Magnetsystems. An den Ventilauslaß 4 schließt sich ein Schlauchstück 22 an, dessen Austrittsöffnung 22.1 in der Nähe des Bodens des Brühwasserbehälters 18 angeordnet ist. Durch diese Austrittsöffnung 22.1 gelangt das Getränk oder das Brühwasser direkt in ein Gefäß 23.

Wie aus Figuren 1 und 2 zu entnehmen, besitzen die Ausgabeventile AV1, AV2 und AV3 an der Einlaßseite jeweils einen Zuflußkanal 3.11 bzw. 3.21 und 3.31 und einen Abflußkanal 3.12 bzw. 3.22 und 3.32. Sowohl die Zuflußkanäle 3.11, 3.21 und 3.31 als auch die Abflußkanäle 3.12, 3.22 und 3.32 sind direkt mit der jeweiligen Ventilkammer 2.1, 2.2 und 2.3 verbunden. Die Ausgabeventile AV1, AV2 und AV3 sind nun derart hintereinander geschaltet, daß sich jeweils der Zuflußkanal des nachfolgenden Ventils an den Abflußkanal des vorhergehenden Ventils anschließt, so daß ein ungehinderter Fließweg durch sämtliche Ventilkammern 2.1, 2.2 und 2.3 entsteht. Der Zuflußkanal 3.11 des ersten Ausgabeventils AV1 ist über eine Zuleitung 18.4 an den Brühwasserbehälter 18 angeschlossen, während der Abflußkanal 3.32 des letzten Ausgabeventils AV3 über einen Abflußkanal 18.1 mit dem Brühwasserbehälter 18 verbunden ist. Zwischen der Zuleitung 18.4 und dem ersten Ausgabeventil AV1 ist eine Kreiselpumpe 15 so angeordnet, daß ihr Sauganschluß 15.1 sich an die Zuleitung 18.4 anschließt, während ihr Druckanschluß 15.2 mit dem Zuflußkanal 3.11 des ersten Ausgabeventils AV1 verbunden ist. In der Ableitung 18.1 ist eine Drosselvorrichtung in Form einer Blende 16 anordnet. An dieser Stelle kann aber auch eine andere, beispielsweise eine einstellbare oder ansteuerbare Drosselvorrichtung angeordnet sein.

Wie aus Fig. 1 und 2 ablesbar, entsteht durch die Zuleitung 18.4, die Ableitung 18.1 und die dazwischengeschalteten Ventile eine Bypassleitung, durch welche bei Betätigung der Kreiselpumpe 15 ein Flüssigkeitsstrom in der Pfeilrichtung S strömt. Bei Betätigung der Kreiselpumpe 15 baut sich in dieser Bypassleitung ein Druck auf, der von der Weite bzw. Einstellung der Drosselvorrichtung 16 und der Leistung der Kreiselpumpe 15 abhängt.

Elektrische Steuervorrichtungen zur Ansteuerung der Magnetsysteme der Ausgabeventile AV1, AV2 und AV3 sowie des Antriebs der Kreiselpumpe 15 und gegebenenfalls zur Ansteuerung einer einstellbaren Drosselvorrichtung 16 sind nicht eigens dargestellt und in bekannter Weise aufgebaut.

Durch entsprechende Ansteuerung der Kreiselpumpe 15 und Ausbildung der Drosselvorrichtung 16 kann ein vorgegebener Druck in den Ventilkammern 2.1, 2.2 und 2.3 erzeugt werden, der verhindert, daß im Fließweg der abzugebenden Flüssigkeit Dampfblasen erzeugt werden.

Im Folgenden wird anhand von Figur 4 der grundsätzliche Aufbau der drei Ausgabeventile AV1, AV2 und AV3 erläutert:
Jedes der Elektromagnetventile AV1, AV2 und AV3 besitzt ein Ventilgehäuse 1, in dem eine Ventilkammer 2 angeordnet ist. Die Einbauweise ist derart, daß der mit der Ventilkammer 2 direkt verbundene Ventileinlaß 3 horizontal verläuft, während der mit der Ventilkammer 2 über einen Ventilsitz 5 verbundene Ventilauslaß 4 senkrecht nach unten führt. Dem Ventilsitz 5 gegenüber liegt ein Ventilteller 6, der über einen aus der Ventilkammer 2 nach oben herausgeführten Ventilschaft 7 mit einem Magnetanker 8 verbunden ist, der in einem Führungsrohr 10 geführt ist, welches von einer an der Oberseite des Ventilgehäuses 1 angeordneten Magnetspule 9 umgeben ist. Das Führungsrohr 10 ist an seiner Oberseite abgeschlossen durch ein dem Magnetanker gegenüberliegendes Kopfstück 11, das mit einem Magnetjoch 12 verbunden ist.

Der Innenraum des Führungsrohres 10, in dem der Magnetanker 8 geführt ist, ist von der Ventilkammer 2 durch eine Rollmembran 13 abgetrennt, deren äußerer Rand dichtend mit dem Oberteil des Ventilgehäuses 1 verbunden ist, während ihr innerer Rand einstückig mit dem Ventilteller 6 verbunden ist, der also in die Trennmembran integriert ist.

Wie aus den Fig. 3 und 4 ersichtlich, verläuft außerhalb des Ventils ein Belüftungsrohr 14, dessen oberes Ende oberhalb des Flüssigkeitsspiegels FL1 liegt und dessen unteres Ende an den Ventilauslaß 4 angeschlossen ist. Wenn das Ventil, angesteuert über das Magnetsystem, öffnet, strömt die Flüssigkeit aus dem Brühwasserbehälter 18 durch das Ventil sowie den Schlauch 22 in das Gefäß 23. Durch das Belüftungsrohr 14 ist dabei sichergestellt, daß keine Flüssigkeit im Schlauch 22 zurückgehalten wird.

In Fig. 5 ist eine Variante des Ausgabeventils gemäß Fig. 4 dargestellt. Dabei sind alle Teile, die genau der Ausführungsform nach Fig. 4 entsprechen, mit der gleichen Bezugsziffer versehen. Das Ausgabeventil nach Fig. 5 unterscheidet sich von dem Ausgabeventil nach Fig. 4 dadurch, daß die Ventilkammer 2 vom Innenraum des Führungsrohres 10 nicht durch eine Rollmembrane, sondern durch eine Abschlußplatte 13' abgetrennt ist, durch welche der Ventilschaft 7' dichtend hindurchgeführt und innerhalb der Ventilkammer mit dem Ventilteller 6' verbunden ist, der an der dem Ventilsitz 5 gegenüberliegenden Seite mit einer Dichtung 6'' versehen ist. Zwischen Ventilteller 6' und der Abschlußplatte 13' ist ein Faltenbalg 13'' angeordnet. Die Funktionsweise des Ventils nach Fig. 5 entspricht genau der Funktionsweise des Ventils nach Fig. 4.

Mit der oben beschriebenen Ausgabeventilanordnung ist ein Betriebsverfahren durchführbar, bei dem jeweils zu einem vorgegebenen Zeitpunkt vor dem Öffnen eines oder mehrerer der Ausgabeventile AV1, AV2 und AV3 der Antrieb der Kreiselpumpe 15 eingeschaltet und zu einem vorgegebenen Zeitpunkt nach dem Schließen des letzten Ausgabeventils wieder abgeschaltet wird. Hierdurch wird erreicht, daß nach dem Einschalten zunächst eventuell vorhandene Dampfblasen wieder in den Brühwasserbehälter 18 gedrückt werden und der für die Dosierung erforderliche Staudruck aufgebaut wird. Dadurch, daß der Antrieb der Kreiselpumpe 15 in vorgegebenen Zeitintervallen ein- und wieder ausgeschal tet wird, ist es möglich, eine gleichbleibende Temperatur in den Ausgabeventilen AV1, AV2 und AV3 zu erreichen. Schließlich kann zur Entkalkung der Ausgabeventile AV1, AV2 und AV3 der Antrieb der Kreiselpumpe 15 auch für einen längeren Zeitraum eingeschaltet werden, um so eine längere kräftige Zirkulation durch den Bypass bzw. die Ventilkammern 18.4-2.1-2.2-2.3-18.1 zu erreichen, durch den gegebenenfalls unter Zusatz von Entkaltungsmitteln, die Entkalkung gefördert wird.

## Patentansprüche

1. Ausgabeventilanordnung für Brühwasser, insbesondere an einem Heißgetränkeautomaten, mit mindestens einem Ausgabeventil (AV1, AV2, AV3), das einen an einen Brühwasserbehälter (18) angeschlossenen Ventileinlaß (3) und einen über einen Ventilsitz (5) mit dem Ventileinlaß (3) verbundenen Ventilauslaß (4) aufweist, dadurch gekennzeichnet, daß der Ventileinlaß (3) jedes Ausgabeventils (AV1, AV2, AV3) einerseits über eine Zuleitung (18.4) und andererseits über eine Ableitung (18.1) mit dem Brühwasserbehälter (18) verbunden ist, wobei in der Zuleitung (18.4) eine Pumpe (15) und in der Ableitung (18.1) eine Drosselvorrichtung (16) angeordnet ist.

2. Ausgabeventilanordnung nach Anspruch 1, dadurch gekennzeichnet, daß der Ventileinlaß (3) jedes Ausgabeventils an eine Bypassleitung angeschlossen ist, die über die Zuleitung (18.4) aus dem Brühwasserbehälter heraus und über die Ableitung (18.1) zum Brühwasserbehälter zurückgeführt ist.

3. Ausgabeventilanordnung nach Anspruch 1 mit einem oder mehreren Ausgabeventilen (AV1, AV2, AV3), die jeweils ein Ventilgehäuse (1) aufweisen, in dem eine Ventilkammer (2, 2.1, 2.2, 2.3) angeordnet ist, die direkt mit dem Ventileinlaß (3) und über den Ventilsitz (5) mit dem Ventilauslaß (4) verbunden ist sowie ein am Ventilgehäuse (1) angeordnetes Magnetsystem (8 bis 12) mit einem Magnetanker (8), der über einen Ventilschaft (7) mit einem dem Ventilsitz (5) gegenüberliegenden Ventilteller (6) verbunden ist, dadurch gekennzeichnet, daß jede Ventilkammer (2.1, 2.2, 2.3) an der Einlaßseite einen Zuflußkanal (3.11, 3.21, 3.31) und einen Abflußkanal (3.12, 3.22, 3.32) aufweist, wobei jeder Zuflußkanal mit der Zuleitung (18.4) und jeder Abflußkanal mit der Ableitung (18.1) derart verbunden ist, daß die Gesamtheit der Ventilkammern (2.1, 2.2, 2.3) eine zwischen Zuleitung (18.4) und Ableitung (18.1) eingeschaltete Bypassleitung darstellt.

4. Ausgabeventilanordnung nach Anspruch 3 mit mehreren Ausgabeventilen (AV1, AV2, AV3), dadurch gekennzeichnet, daß die Ventilkammern (2.1, 2.2, 2.3) in Hintereinanderschaltung miteinander verbunden sind, indem der Zuflußkanal (3.21, 3.31) jeder folgenden Ventilkammer mit dem Abflußkanal (3.12, 3.22) der jeweils vorhergehenden Ventilkammer verbunden ist, und der erste Zuflußkanal (3.11) an die Zuleitung (18.4) und der letzte Abflußkanal (3.32) an die Ableitung (18.1) angeschlossen ist.

5. Ausgabeventilanordnung nach Anspruch 3 mit mehreren Ausgabeventilen, dadurch gekennzeichnet, daß die Ventilkammern in Parallelschaltung miteinander verbunden sind, indem jeder Zuflußkanal direkt an die Zuleitung und jeder Abflußkanal direkt an die Ableitung angeschlossen ist.

6. Ausgabeventilanordnung nach einem der Ansprüche 3 bis 5, dadurch gekennzeichnet, daß die Ausgabeventile (AV1, AV2, AV3) so ausgebildet und angeordnet sind, daß mindestens die Ventilkammern (2.1, 2.2, 2.3) innerhalb einer gemeinsamen Ventilblockleiste angeordnet sind.

7. Ausgabeventilanordnung nach Anspruch 6, dadurch gekennzeichnet, daß die Pumpe (15) vor der Ventilblockleiste angeordnet ist.

8. Ausgabeventilanordnung nach Anspruch 6, dadurch gekennzeichnet, daß die Pumpe (15) in der Ventilblockleiste angeordnet ist.

9. Ausgabeventilanordnung nach einem der Ansprüche 1 bis 8, dadurch gekennzeichnet, daß die Pumpe (15) eine Kreiselpumpe ist.

10. Ausgabeventilanordnung nach einem der Ansprüche 1 bis 9, dadurch gekennzeichnet, daß die Drosselvorrichtung einstellbar ist.

11. Ausgabeventilanordnung nach Anspruch 10, dadurch gekennzeichnet, daß die Drosselvorrichtung elektrisch einstellbar ist.

12. Ausgabeventilanordnung nach Anspruch 3, dadurch gekennzeichnet, daß die Magnetsysteme der Ausgabeventile (AV1, AV2, AV3) und der Pumpenantrieb an eine gemeinsame Steuereinrichtung angeschlossen sind.

13. Ausgabeventilanordnung nach Anspruch 11 und 12, dadurch gekennzeichnet, daß die Drosselvorrichtung an die gemeinsame Steuereinrichtung angeschlossen ist.

14. Ausgabeventilanrodnung nach einem der Ansprüche 1 bis 9, dadurch gekennzeichnet, daß die Drosselvorrichtung als Blende (16) ausgebildet ist.

15. Betriebsverfahren zur Steuerung einer Ausgabeventilanordnung nach den Ansprüchen 12 oder 13, dadurch gekennzeichnet, daß jeweils zu einem vorgegebenen Zeitpunkt vor dem Öffnen eines oder mehrerer der Ausgabeventile (AV1, AV2, AV3) der Pumpenantrieb eingeschaltet und zu einem vorgegebenen Zeitpunkt nach dem Schließen des letzten Ausgabeventils der Pumpenantrieb abgeschaltet wird.

16. Betriebsverfahren nach Anspruch 15, dadurch gekennzeichnet, daß in vorgegebenen Zeitintervallen der Pumpenantrieb ein- und ausgeschaltet wird.

17. Betriebsverfahren nach Anspruch 15 und 16, dadurch gekennzeichnet, daß zur Entkalkung der Ausgabeventile (AV1, AV2, AV3) der Pumpenantrieb über einen vorgegebenen Zeitraum eingeschaltet wird, der größer ist als die Zeitintervalle.

## Claims

1. Dispensing valve arrangement for hot water in particular in an automatic hot drinks dispenser having at least one dispensing valve (AV1, AV2, AV3) which comprises a valve inlet (3) connected to a hot water container (18) and a valve outlet (4) connected by a valve seat (5) to the valve inlet (3), characterized in that the valve inlet (3) of each dispensing valve (AV1, AV2, AV3) is connected to the hot water container (18) firstly by a delivery line (18.4) and secondly by an outlet (18.1), a pump (15) being disposed in the delivery line (18.4) and a choke device (16) being disposed in the outlet (18.1).

2. Dispensing valve arrangement according to Claim 1, characterized in that the valve inlet (3) of each dispensing valve is connected to a bypass line which is guided via the delivery line (18.4) out of the hot water container and via the outlet (18.1) back to the hot water container.

3. Dispensing valve arrangement according to Claim 1 having one or a plurality of dispensing valves (AV1, AV2, AV3) which comprise in each case a valve housing (1) in which a valve chamber (2, 2.1, 2.2, 2.3) is disposed which is directly connected to the valve inlet (3) and via the valve seat (5) to the valve outlet (4) as well as a magnet system (8 to 12) which is disposed on the valve housing (1) and which has a magnet armature (8) which is connected by a valve stem (7) to a valve disc (6) lying opposite the valve seat (5), characterized in that each valve chamber (2.1, 2.2, 2.3) comprises at the inlet side an inflow duct (3.11, 3.21, 3.31) and an outflow duct (3.12, 3.22, 3.32), each inflow duct being connected to the delivery line (18.4) and each outflow duct being connected to the outlet (18.1) in such a way that the assembly of all the valve chambers (2.1, 2.2, 2.3) represents a bypass line connected between the delivery line (18.4) and the outlet (18.1).

4. Dispensing valve arrangement according to Claim 3 having a plurality of dispensing valves (AV1, AV2, AV3), characterized in that the valve chambers (2.1, 2.2, 2.3) are connected behind one another in that the inflow duct (3.21, 3.31) of each following valve chamber is connected to the outflow duct (3.12, 3.22) of the preceding valve chamber in each case, and the first inflow duct (3.11) is connected to the delivery line (18.4) and the last outflow duct (3.32) is connected to the outlet (18.1).

5. Dispensing valve arrangement according to Claim 3 having a plurality of dispensing valves, characterized in that valve chambers are connected to one another in a parallel arrangement in that each inflow duct is directly connected to the delivery line and each outflow duct is directly connected to the outlet.

6. Dispensing valve arrangement according to any one of Claims 3 to 5, characterized in that the dispensing valves (AV1, AV2, AV3) are constructed and disposed in such a way that at least the valve chambers (2.1, 2.2, 2.3) are disposed inside a common valve block strip.

7. Dispensing valve arrangement according to Claim 6, characterized in that the pump (15) is disposed before the valve block strip.

8. Dispensing valve arrangement according to Claim 6, characterized in that the pump (15) is disposed in the valve block strip.

9. Dispensing valve arrangement according to any one of Claims 1 to 8, characterized in that the pump (15) is a centrifugal pump.

10. Dispensing valve arrangement according to any one of Claims 1 to 9, characterized in that the choke device is adjustable.

11. Dispensing valve arrangement according to Claim 10, characterized in that the choke device can be adjusted electrically.

12. Dispensing valve arrangement according to Claim 3, characterized in that the magnet systems of the dispensing valves (AV1, AV2, AV3) and the pump drive are connected to a common control device.

13. Dispensing valve arrangement according to Claims 11 and 12, characterized in that the choke device is connected to the common control device.

14. Dispensing valve arrangement according to any one of Claims 1 to 9, characterized in that the choke device is in the form of a restrictor (16).

15. Operating method for controlling a dispensing valve arrangement according to either of Claims 12 and 13, characterized in that the pump drive is switched on in each case at a predetermined moment before one or a plurality of the dispensing valves (AV1, AV2, AV3) opens and the pump drive is switched off at a predetermined moment when the last dispensing valve has closed.

16. Operating method according to Claim 15, characterized in that the pump drive is switched on and off at predetermined time intervals.

17. Operating method according to Claims 15 and 16, characterized in that the pump drive is switched on over a predetermined period of time which is greater than the time intervals in order to decalcify the dispensing valves (AV1, AV2, AV3).

## Revendications

1. Agencement de soupapes de distribution d'eau chaude, en particulier dans des distributeurs de boissons chaudes, comprenant au moins une soupape de distribution (AV1, AV2, AV3) présentant une entrée de soupape (3) raccordée au réservoir d'eau chaude (18) et une sortie de soupape (4) reliée, par un siège de soupape (5), avec l'entrée de soupape (3), caractérisé en ce que l'entrée (3) de chaque soupape de distribution (AV1, AV2, AV3) est reliée au réservoir d'eau chaude (18) par une conduite d'arrivée (18.4), d'une part, et par une conduite de départ (18.1), d'autre part, une pompe (15) étant disposée dans la conduite d'arrivée (18.4) et un dispositif d'étranglement (16) dans la conduite de départ (18.1).

2. Agencement de soupapes de distribution selon la revendication 1, caractérisé en ce que l'entrée (3) de chaque soupape de distribution est raccordée à une conduite de bypass sortant du réservoir d'eau chaude par la conduite d'arrivée (18.4) et rentrant dans le réservoir d'eau chaude par la conduite de départ (18.1).

3. Agencement de soupapes de distribution selon la revendication 1, comprenant une ou plusieurs soupapes de distribution (AV1, AV2, AV3) présentant chacune un corps de soupape (1) dans lequel est disposée une chambre de soupape (2, 2.1, 2.2, 2.3) directement reliée à l'entrée de soupape (3) et à la sortie de soupape (4) par l'intermédiaire du siège de soupape (5), ainsi qu'un système électromagnétique (8 à 12) disposé sur le corps de la soupape (1) comprenant un induit électromagnétique (8) relié par une tige de soupape (7) avec une tête de soupape (6) située en face du siège de soupape (5), caractérisé en ce que la chambre de soupape (2.1, 2.2, 2.3) présente, côté entrée, un canal d'arrivée (3.11, 3.21, 3.31) et un canal de départ (3.12, 3.22, 3.32), chaque canal d'arrivée étant relié avec la conduite d'arrivée (18.4) et chaque canal de départ étant relié à la conduite de départ (18.1) de manière que l'ensemble des chambres de soupape (2.1, 2.2, 2.3) constitue une conduite de bypass intercalée entre la conduite d'arrivée (18.4) et la conduite de départ (18.1).

4. Agencement de soupapes de distribution selon la revendication 3 comprenant plusieurs soupapes de distribution (AV1, AV2, AV3), caractérisé en ce que les chambres de soupape (2.1, 2.2, 2.3) sont reliées en série entre elles, en ce que le canal d'arrivée (3.21, 3.31) de chaque chambre de soupape suivante est relié au canal de départ (3.12, 3.22) de la chambre de soupape précédente, que le premier canal d'arrivée (3.11) est raccordé à la conduite d'arrivée (18.4) et que le canal de départ (3.32) est raccordé à la conduite de départ (18.1).

5. Agencement de soupapes de distribution selon la revendication 3 comprenant plusieurs soupapes de distribution, caractérisé en ce que les chambres de soupape sont reliées en parallèle entre elles, que chaque canal d'arrivée est directement raccordé à la conduite d'arrivée et que chaque canal de départ est directement raccordé à la conduite de départ.

6. Agencement de soupapes de distribution selon l'une quelconque des revendications 3 à 5, caractérisé en ce que les soupapes de distribution (AV1, AV2, AV3) sont réalisées et disposées de manière à ce qu'au moins les chambres de soupapes (2.1, 2.2, 2.3) soient disposées à l'intérieur d'un bloc de soupapes commun.

7. Agencement de soupapes de distribution selon la revendication 6, caractérisé en ce que la pompe (15) est disposée en amont du bloc de soupapes.

8. Agencement de soupapes de distribution selon la revendication 6, caractérisé en ce que la pompe (15) est disposée à l'intérieur du bloc de soupapes.

9. Agencement de soupapes de distribution selon l'une quelconque des revendications 1 à 8, caractérisé en ce que la pompe (15) est une pompe centrifuge.

10. Agencement de soupapes de distribution selon l'une quelconque des revendications 1 à 9, caractérisé en ce que le dispositif d'étranglement est réglable.

11. Agencement de soupapes de distribution selon la revendication 10, caractérisé en ce que le dispositif d'étranglement dispose d'un réglage électrique.

12. Agencement de soupapes de distribution selon la revendication 3, caractérisé en ce que les systèmes électromagnétiques des soupapes de distribution (AV1, AV2, AV3) et le moteur de la pompe sont raccordés à un système de commande commun.

13. Agencement de soupapes de distribution selon les revendications 11 et 12, caractérisé en ce que le dispositif d'étranglement est raccordé au système de commande commun.

14. Agencement de soupapes de distribution selon l'une quelconque des revendications 1 à 9, caractérisé en ce que le dispositif d'étranglement est réalisé sous la forme d'un diaphragme (16).

15. Procédé de commande d'un agencement de soupapes de distribution selon les revendications 12 ou 13, caractérisé en. ce que le moteur de la pompe est mis en marche à un moment donné avant l'ouverture de l'une ou de plusieurs des soupapes de distribution (AV1, AV2, AV3) et qu'il est coupé à un moment donné après la fermeture de la dernière soupape de distribution.

16. Procédé selon la revendication 15, caractérisé en ce que le moteur de la pompe est mis en marche et coupé à des intervalles préalablement définis.

17. Procédé selon les revendications 15 et 16, caractérisé en ce que, pour détartrer les soupapes de distribution (AV1, AV2, AV3) le moteur de la pompe est mis en marche pendant une période préalablement définie dont la durée est supérieure à celle des intervalles.
